# EUROPEAN PATENT SPECIFICATION

(11) **EP 3 653 498 B1**
(45) Date of publication and mention of the grant of the patent: **11.10.2023**
(21) Application number: 19208740.1
(22) Date of filing: 12.11.2019
(51) Int. Cl.: B64U 10/25, B64U 30/10, B64U 101/60, B64U 30/20

(54) **ADAPTIVE FLIGHT CONTROLS**
ADAPTIVE FLUGSTEUERUNGEN
COMMANDES DE VOL ADAPTATIVES

(30) Priority: 13.11.2018 US 201816188937
(43) Date of publication of application: 20.05.2020
(73) Proprietor: Textron Innovations Inc., Providence, Rhode Island 02903 (US)
(72) Inventor: WITTMAAK JR., John Robert, Newark, TX Texas 76071 (US); PETERS, Russel C, Fort Worth, TX Texas 76118 (US); LOUIS, Andrew Vincent, Fort Worth, 76244 (US)
(74) Representative: Barker Brettell LLP

(56) References cited:
- JP-A- 2018 039 420
- US-A1- 2017 293 884
- US-A1- 2018 002 015
- US-B1- 9 376 208
- US-B1- 9 422 055
- US-B1- 9 849 981

## Description

### TECHNICAL FIELD

This disclosure relates generally to aircraft and, more particularly, to a vertical takeoff and landing ("VTOL") aircraft having adaptive flight controls.

### BACKGROUND

Unlike fixed-wing aircraft, vertical takeoff and landing ("VTOL") aircraft do not require runways. Instead, VTOL aircraft are capable of taking off, hovering, and landing vertically. One example of VTOL aircraft is a helicopter, which is a rotorcraft having one or more rotors that provide vertical lift and forward thrust to the aircraft. Helicopter rotors not only enable hovering and vertical takeoff and vertical landing, but also enable forward, aftward, and lateral flight. These attributes make helicopters highly versatile for use in congested, isolated or remote areas where fixed-wing aircraft may be unable to take off and land. Helicopters, however, typically lack the forward airspeed of fixed-wing aircraft.

A tiltrotor is another example of a VTOL aircraft. Tiltrotor aircraft utilize tiltable rotor systems that may be transitioned between a forward thrust orientation and a vertical lift orientation. The rotor systems are tiltable relative to one or more fixed wings such that the associated proprotors have a generally horizontal plane of rotation for vertical takeoff, hovering, and vertical landing and a generally vertical plane of rotation for forward flight, or airplane mode, in which the fixed wing or wings provide lift. In this manner, tiltrotor aircraft combine the vertical lift capability of a helicopter with the speed and range of fixed-wing aircraft. Yet another type of VTOL aircraft is commonly referred to as a "tail-sitter." As the name implies, a tail-sitter takes off and lands on it's tail, but tilts horizontally for forward flight.

VTOL aircraft may be manned or unmanned. An unmanned aerial vehicle ("UAV"), also commonly referred to as a "drone," is an aircraft without a human pilot aboard. UAVs may be used to perform a variety of tasks, including filming, package delivery, surveillance, and other applications. A UAV typically forms a part of an unmanned aircraft system ("UAS") that includes the UAV, a ground-based controller, and a system of communication between the vehicle and controller.

Aircraft are generally used for high speed direct transport of passengers and/or cargo. Uneven loading of such passengers and/or cargo can affect the center of gravity ("CG") of an aircraft, which may affect flight characteristics and performance of the aircraft. Fixed wing aircraft offer advantages over rotorcraft in that they are capable of longer range and more efficient flight. In contrast, rotorcraft have the distinct advantage of vertical takeoff and landing, hover, sideward, rearward, and forward flight, which allows for precise landing in space-restricted or otherwise obstructed landing zones in addition to precise maneuvering to and from such landing zones. Tiltrotors and tail-sitters enjoy the advantages of both fixed wing aircraft and rotorcraft; however, they are especially sensitive to changes in weight and CG.

US9376208 discloses an unmanned aerial vehicle ("UAV") configured with a redundant power generation system on-board the UAV. A redundant power system on-board the UAV can selectively utilize an auxiliary power source during operation and/or flight of the UAV. The power system on-board the UAV may include a battery and at least one auxiliary power source comprising a combustion engine. The combustion engine on-board the UAV may be selectively operated to charge the battery when a charge level of the battery is below a full charge level, and/or to power one or more propeller motors of the UAV.

US9422055 discloses varying a speed of one or more motors in an unmanned aerial vehicle (UAV) to reduce unwanted sound (i.e., noise) of the UAV. A UAV may include motors coupled with propellers to provide lift and propulsion to the UAV in various stages of flight, such as while ascending, descending, hovering, or transiting. The motors and propellers may generate noise, which may include a number of noise components such as tonal noise (e.g., a whining noise such as a whistle of a kettle at full boil) and broadband noise (e.g., a complex mixture of sounds of different frequencies, such as the sound of ocean surf). By varying the controls to the motors, such as by varying the speed or revolutions per minute (RPM) of a motor during operation by providing random or pseudo-random RPM variations, the UAV may generate a noise signature with reduced tonal noise.

US2018002015 discloses a transportation method including coupling a flying frame to a passenger pod assembly; lifting the passenger pod assembly into the air in a vertical takeoff and landing mode with the passenger pod assembly in a generally horizontal attitude; transitioning from the vertical takeoff and landing mode to a forward flight mode by rotating the flying frame relative to the passenger pod assembly, which remains in the generally horizontal attitude; transporting the passenger pod assembly toward a second location in the forward flight mode; transitioning the flying frame from the forward flight mode to the vertical takeoff and landing mode by rotating the flying frame relative to the passenger pod assembly, which remains in the generally horizontal attitude; landing the flying frame at the second location in the vertical takeoff and landing mode; and releasing the passenger pod assembly.

US2017293884 discloses an unmanned aerial vehicle (UAV) which may be used to deliver a package. The UAV may include a communication interface configured to receive a request to transport a package. The UAV may also include a navigation unit configured to direct the UAV to the package. The UAV may further include a sensor configured to determine one or more physical characteristics of the package. The UAV may also include an acceptance unit configured to accept the package for transport in response to the one or more physical characteristics satisfying a set of criteria.

### SUMMARY

Aspects of the invention are set out according to appended independent claims 1 and 2. Embodiments of the invention are set out according to the appended dependent claims.

### BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements.
FIGURE 1 is an oblique view of an aircraft configured for operation in a helicopter flight mode in accordance with embodiments described herein.
FIGURE 2 is an oblique view of the aircraft of FIGURE 1 configured for operation in an airplane flight mode in accordance with embodiments described herein.
FIGURE 3 is an oblique view of a cargo pod in an unpressurized state in accordance with embodiments described herein.
FIGURE 4 is an oblique view of a cargo pod in a pressurized state in accordance with embodiments described herein.
FIGURE 5 is a flowchart of a method of providing an aircraft with adaptive flight controls in accordance with embodiments described herein.
FIGURE 6 is a schematic diagram of a general-purpose processor (e.g. electronic controller or computer) system suitable for implementing the embodiments of this disclosure.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions may be made to achieve the developer's specific goals, including compliance with system, business, and/or legal constraints, which may vary from one implementation to another. Moreover, it will be appreciated that, while such a development effort might be complex and time-consuming, it would nevertheless be a routine undertaking for those of ordinary skill in the art having the benefit of this disclosure.

While the making and using of various embodiments of the present disclosure are discussed in detail below, it should be appreciated that the present disclosure provides many applicable inventive concepts, which can be embodied in a wide variety of specific contexts. The specific embodiments discussed herein are merely illustrative and do not delimit the scope of the present disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom" or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature) of an element, operations, and/or conditions, the phrase "between X and Y" represents a range that includes X and Y.

Further, as referred to herein in this Specification, the terms "forward", "aft", "inboard", and "outboard" may be used to describe relative relationship(s) between components and/or spatial orientation of aspect(s) of a component or components. The term "forward" may refer to a special direction that is closer to a front of an aircraft relative to another component or component aspect(s). The term "aft" may refer to a special direction that is closer to a rear of an aircraft relative to another component or component aspect(s). The term "inboard" may refer to a location of a component that is within the fuselage of an aircraft and/or a spatial direction that is closer to or along a centerline of the aircraft relative to another component or component aspect(s), wherein the centerline runs in a between the front and the rear of the aircraft. The term "outboard" may refer to a location of a component that is outside the fuselage of an aircraft and/or a special direction that farther from the centerline of the aircraft relative to another component or component aspect(s).

Still further, the present disclosure may repeat reference numerals and/or letters in the various examples. This repetition is for the purpose of simplicity and clarity and does not in itself dictate a relationship between the various embodiments and/or configurations discussed. Example embodiments that may be used to implement the features and functionality of this disclosure will now be described with more particular reference to the accompanying FIGURES.

As markets emerge for autonomous unmanned aircraft (or "UAVs") to deliver packages with minimal-to-no human interaction, it becomes important for the aircraft to be able to adjust its flight control gains for a wide range of weights and center of gravity ("CG") locations. This is particularly challenging for VTOL UAVs when the payload's weight and CG location is unique for every package the UAV picks up. The fact that such aircraft are required to perform precision landings makes it important that their control systems are performing at their peak. In accordance with the teachings of certain examples described herein, in response to a triggering event, such as closure of the cargo pod, the aircraft is caused to enter a low hover state and execute a short series of maneuvers. Such maneuvers may include a roll maneuver (i.e., a rotation about a longitudinal (front to rear) axis of the aircraft, defined herein as the X axis), a pitch maneuver (i.e., a rotation about a lateral (right to left) axis of the aircraft, defined herein as the Y axis) and/or a yaw maneuver (i.e., a rotation about a vertical (top to bottom) axis of the aircraft, defined herein as the Z axis). The response of the aircraft to the series of series of maneuvers is detected by a number of sensors and is used to evaluate the aircraft's overall gross weight, CG location, and payload inertia. The aircraft's Flight Control System ("FCS") uses the determined weight, CG location and/or payload inertia data to index one or more lookup tables (or as input into one a numerical model) populated with optimal control data developed during characterization flights for a variety of weight, CG, and/or payload inertia combinations. In particular, the optimal control data includes optimal control gains to be applied during operation of the aircraft under a particular combination of weight, CG, and/or payload inertia conditions. In particular, the one or more "most like" response(s) from the lookup table(s)/numerical model are used to assign the associated control gains. In effect, the aircraft performs the maneuvers to "feel" its own weight and CG, as well as the inertia of the payload, after which the aircraft's FCS applies the control gains output from the table(s)/numerical model in operating the aircraft. For example, throttle gain may be adjusted to account for the overall weight of the vehicle including payload. The greater the overall weight, the more the vehicle will benefit from a higher throttle gain in order to get the same reaction from the vehicle without payload; however, increasing the throttle gain too much will cause the vehicle to oscillate.

In certain examples, the FCS may alternatively and/or additionally leverage sensors deployed at a kiosk or launch point, which sensors may provide differential GPS information for enabling precise determination of the location and altitude of the aircraft, as well as access to information regarding wind conditions, air temp and pressure to further improve the ability of the FCS of the aircraft to estimate the aircraft's weight and CG and the effect thereof on the control gains under present conditions.

In still other embodiments, the series of maneuvers may also be used by the FCS to determine whether the payload being picked up contains an unsecured object (which may be indicated by the detected inertia of the payload), which may make the aircraft unstable during flight. In such cases, the aircraft may take remedial measures to avoid flight problems, such as aborting takeoff and/or returning the payload to a kiosk until the situation can be corrected. Such embodiments may thereby improve the accuracy and performance of an aircraft after it picks up a payload by verifying that the payload is properly secured and has a stable CG.

Disclosed herein are embodiments of a vertical takeoff and landing (VTOL) aircraft that includes a cargo area, such as a cargo pod. The cargo area, or pod, is configured to receive payloads of various shapes, sizes, and weights. In some embodiments, the cargo pod may include inflatable bladders. In such embodiments, once a payload is secured within the cargo pod, the bladders may be inflated to a predetermined or preprogrammed pressure based on the characteristics (e.g., shape, size, weight, etc.) or nature (e.g., weight distribution) of the payload and/or to maintain a CG of the pod with payload. Further, in some embodiments of this disclosure, the inflatable bladders are inflated in response to a closing of the cargo pod or other initializing event.

During operation and flight of the aircraft, which can include vertical takeoff and landing, hover, sideward, rearward, and forward flight, the center of gravity of the aircraft can change. The shift in the center of gravity is detected by one or more sensors and may be the result of the payload shifting, addition or removal of one or more payload components, a change in operation of the aircraft, and/or the use of fuel by the aircraft. The aircraft disclosed herein includes a flight control system ("FCS") that adaptively selects optimal control gains of the aircraft based on weight, CG, and/or payload inertia, thereby effectively and adaptively optimizing operation of the aircraft during helicopter, transition, and airplane modes so as to optimize payload transportation speed and safety.

Accordingly, this disclosure contemplates a vertical takeoff and landing (VTOL) aircraft comprising a cargo pod and having an FCS configured to adaptively select and apply aircraft control gains in order to optimize operation of the aircraft during transportation of a payload to its intended destination. Still further, in embodiments of this disclosure, the aircraft may be fully autonomous and self-directed via a predetermined or preprogrammed location-based guidance system (e.g., global positioning system (GPS), coordinate-based location, street address, etc.) to allow for accurate delivery of the payload to its intended destination.

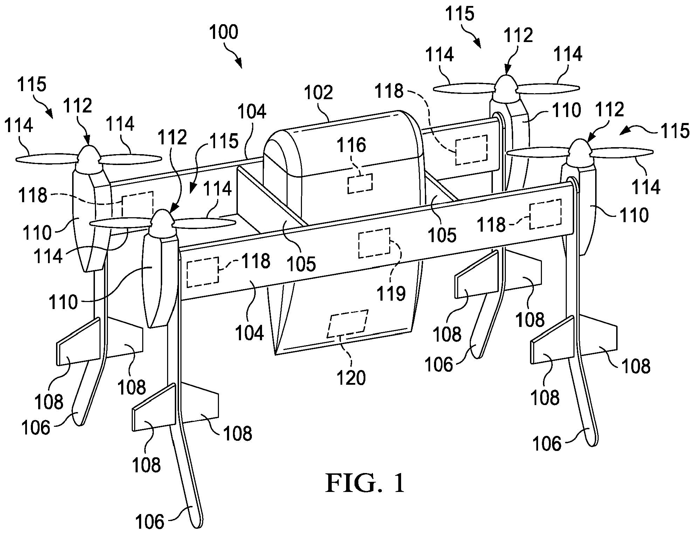

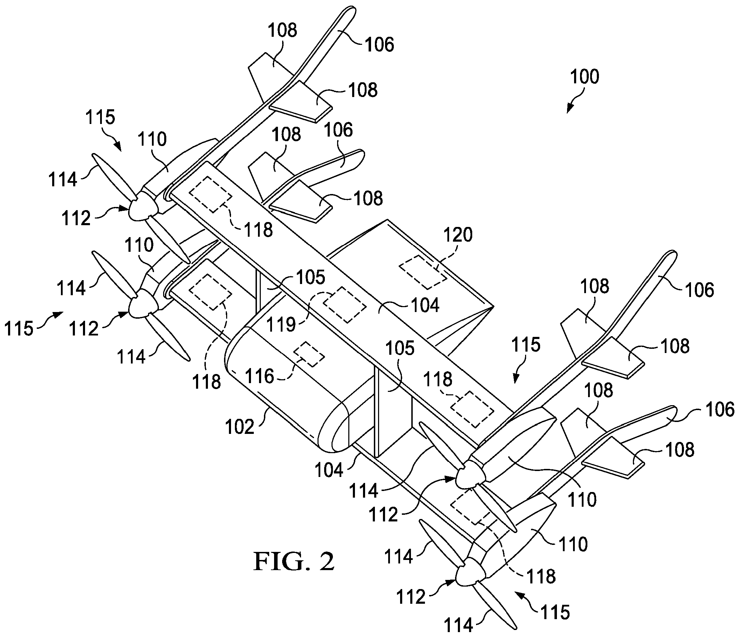

Referring now to FIGUREs 1 and 2, oblique views of an aircraft 100 are shown according to this disclosure. Aircraft 100 is generally configured as a vertical takeoff and landing ("VTOL") aircraft, more specifically an autonomous pod transport ("APT") convertible drone aircraft, that is operable in a helicopter mode (shown in FIGURE 1) associated with vertical takeoff from and landing to a landing zone, hover, and sideward and rearward mobility or flight, and an airplane mode (shown in FIGURE 2) associated with forward flight. Additionally, since aircraft 100 is a convertible aircraft, it is also operable in a conversion mode when transitioning between the helicopter and airplane modes. Further, being a drone-type aircraft, aircraft 100 is configured for remote control and operation. Additionally, at least in some embodiments, aircraft 100 may be fully made autonomous and self-directed via a predetermined or preprogrammed location-based guidance system (e.g., global positioning system ("GPS"), coordinate-based location, street address, etc.).

Aircraft 100 comprises a cargo pod 102 that may function as the aircraft fuselage, biplane wings 104, vertical supports 105 disposed between the wings 104, tail booms 106, horizontal stabilizers 108 extending from each tail boom 106, and a plurality of pylons 110 each comprising a rotor system 112 having a plurality of rotor blades 114. Each combination of a pylon 110 and its associated rotor system 112 comprising rotor blades 114 may be referred to herein as a propulsion assembly 115. Aircraft 100 also comprises a payload sensor 116, a plurality of aircraft sensors 118, an orientation sensor 119, and a control system 120. Wings 104 comprise a substantially parallel, double-wing configuration that provides lift to the aircraft 100 during forward flight while also maintaining a smaller footprint of the aircraft 100 when the aircraft 100 is on the ground. Vertical supports 105 are disposed on each side of the cargo pod 102 and affixed between the wings 104 to provide structure and support to the wings 104. The cargo pod 102 is generally positioned between the wings 104 and the vertical supports 105. In the embodiment shown, the cargo pod 102 is affixed to the vertical supports 105. However, in other embodiments, the cargo pod 102 may be affixed to the wings 104 or both the wings 104 and vertical supports 105. Additionally, while two vertical supports 105 are shown, in some embodiments, aircraft 100 may comprise more vertical supports 105 depending on the configuration of the aircraft 100.

Tail booms 106 are disposed on the outboard ends of each wing 104. The tail booms 106 are curved at the aft ends to provide stabilization to the aircraft 100 during forward flight in a manner substantially similar as other tail surfaces known in the art, while also doubling as a landing gear for the aircraft 100. As such the curved ends of the tail booms 106 provide a wider base for the landing gear. Each tail boom 106 also comprises a pair of horizontal stabilizers 108 coupled to each of an inner and outer surface of the tail boom 106. The horizontal stabilizers 108 function to provide stabilization to the aircraft 100 during forward flight in a manner substantially similar as horizontal stabilizers known in the art. Pylons 110 are disposed on outboard sides of each tail boom 106 proximate the outboard end of each wing 104. Each pylon 110 comprises a selectively rotatable rotor system 112 having a plurality of rotor blades 114 coupled thereto. In the embodiment shown, each rotor system 112 is driven by an associated electric motor. However, in other embodiments, the rotor systems 112 may be driven by a combustion engines or auxiliary power unit through a plurality of interconnect driveshafts and/or auxiliary gearboxes. Furthermore, since aircraft 100 functions as a convertible aircraft, the rotational speeds of each rotor system 112 may be selectively controlled to orient aircraft 100 in the various flight modes.

In an example embodiment, the cargo pod 102 of aircraft 102 may comprise may include a selectively inflatable bladder system disposed within the cargo pod. The cargo pod 102 is configured to receive payloads of varying shapes, sizes, and weights. Once a payload is received within the cargo pod 102, the bladder system, which may include one or more inflatable bladders, shown and described below, may be selectively pressurized such that the one or more bladders make contact with various sides or features of the payload to secure the payload within the cargo pod 102. In certain embodiments, the inflatable bladders are inflated responsive to closure of the cargo pod 102 or some other triggering event.

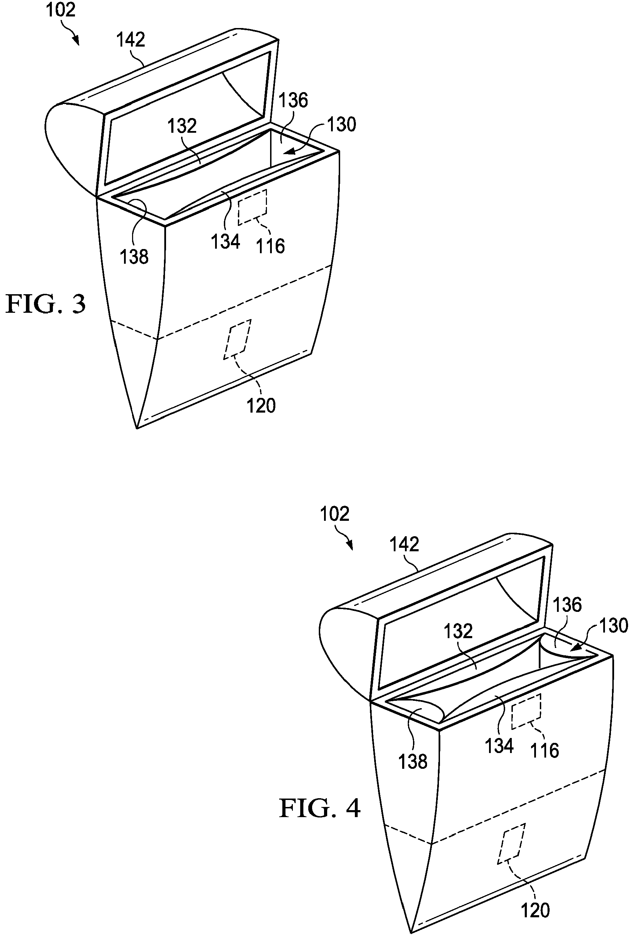

Referring to FIGUREs 3 and 4, illustrated therein are oblique views of the cargo pod 102 of aircraft 100 in an unpressurized state and a pressurized state, respectively. Cargo pod 102 generally comprises a low drag, aerodynamic profile. More specifically, in the embodiment shown, cargo pod 102 comprises a symmetric profile. However, in other embodiments, cargo pod 102 may comprise a cambered airfoil in order to provide additional lift to aircraft 100. The cargo pod 102 is generally configured to receive a payload within an interior of the cargo pod 102. In the embodiment shown, cargo pod 102 comprises a rectangular-shaped interior opening through which the payload is received. However, in other embodiments, cargo pod 102 may comprise a circular, square, triangular, or other shaped interior opening through which the payload is received. The cargo pod 102 comprises a stiff outer structure configured to retain its aerodynamic profile during flight of aircraft 100 and when a payload is inserted into the cargo pod 102. Furthermore, while only one cargo pod 102 is shown, aircraft 100 may comprise multiple cargo pods 102.

As previously noted, in accordance with certain embodiments, means for securing payload within the cargo pod 102, such as an optional bladder system 130, may be disposed within the cargo pod. In the example embodiment shown, optional bladder system 130 may comprise a plurality of selectively inflatable bladders 132, 134, 136, 138 formed from an elastomeric material, nylon-woven fabric, Kevlar, or other material that allows for pressurization of the interior volume of each bladder. Each bladder 132, 134, 136, 138 may be disposed adjacent a wall of the interior of the cargo pod 102.

However, in other embodiments, optional bladder system 130 may comprise a single bladder (e.g. only bladder 132 or bladder 134), only opposing bladders (e.g., bladders 132, 134 or bladders 136, 138), or additional bladders disposed over the interior opening of the cargo pod 102 and in the bottom of the cargo pod 102. Further, in alternative embodiments, bladders 132, 134, 136, 138 may be coupled together to form a single ring-shaped bladder. In yet other alternative embodiments, bladders 132, 134, 136, 138 may be coupled together in fluid communication through a plurality of air plenums or channels. Additionally, in some embodiments, one or more bladders 132, 134, 136, 138 may be attached to an interior wall of the cargo pod 102.

As shown in FIGURE 3, the bladders 132, 134, 136, 138 are unpressurized, and the cargo pod 102 is ready to receive a payload between the bladders 132, 134, 136, 138. The cargo pod 102 may receive payloads of various shapes, sizes, and weights. However, in some embodiments, depending on the size and configuration of aircraft 100, the payload may be weight-restricted to a predetermined weight. Once a payload is inserted into the cargo pod 102 and disposed between the bladders 132, 134, 136, 138, the bladders 132, 134, 136, 138 may be selectively inflated and pressurized. As shown in FIGURE 4, the bladders 132, 134, 136, 138 have been pressurized to secure a payload (not shown for purposes of clarity).

When pressurized, the bladders 132, 134, 136, 138 may contact the payload to firmly secure the payload within the cargo pod 102. In some embodiments, the initial pressurization of the bladders 132, 134, 136, 138 may be predetermined or preprogrammed within control system 120 based on the characteristics (e.g., shape, size, weight, etc.) or nature (e.g., weight distribution) of the payload. After the payload has been placed within the cargo pod 102, cover 142 of the cargo pod 102 can be closed and secured via a latching, locking or other electro-mechanical or mechanical securing mechanism. At this point, aircraft 100 is ready to transport the payload in flight.

As previously noted, the addition of payload within the cargo pod 102 may (and will likely) alter the CG of aircraft 100, which will likely impact flight and/or performance of the aircraft. Similarly, the addition of payload within the cargo pod 102 will alter the weight of the aircraft 100, which will also impact flight and/or performance of aircraft. Still further, the inertia of the payload inserted into the cargo pod 102 will impact flight and/or performance of aircraft 100. In some embodiments, a weight of the payload may be detected by the payload sensor 116. A maneuver, such as accelerating upward and downward, is performed to determine the weight of the vehicle (for example, if the static detection method is inconclusive). In some embodiments, a change in the center of gravity of aircraft 100 caused by addition of payload may be detected by the plurality of aircraft sensors 118, which may be configured to monitor the power and/or torque of each rotor system 112, and the orientation sensor 119. By comparing an orientation of aircraft 100 detected by the orientation sensor 119 to the power and/or torque of each rotor system 112, the center of gravity of aircraft 100 may be determined. Payload inertia may be counteracted and/or accounted for by applying defined control inputs to the system and monitoring the aircraft response through inertial sensors, for example.

As previously noted, and as described in greater detail below, the weight, CG, and/or payload inertia of aircraft 100 after introduction of a payload into cargo pod 102 is used to determine appropriate and optimal control gains for transportation of the payload by the aircraft.

In some embodiments, aircraft 100 may be controlled remotely to reach an intended destination. However, in some embodiments, aircraft 100 may be fully autonomous and self-directed via a predetermined or preprogrammed location-based guidance system (e.g., GPS, coordinate-based location, street address, etc.) to allow for accurate delivery of the payload to its intended destination. A destination may be input to the control system 120 by a remote pilot or may be received into the control system 120 through the payload sensor 116 reading or detecting a shipping label, QR code, RFID tag, or other identifying feature associated with the payload that associates a predetermined destination with the payload. Additionally, payload physical characteristics, such as weight, CG, and inertia, may be input to the control system 120 by a remote pilot or may be received into the control system 120 through the payload sensor 116 reading or detecting a shipping label, QR code, RFID tag, or other identifying feature associated with the payload that associates such physical characteristics with the payload.

Once the aircraft has reached its intended destination, the control system 120 may depressurize one or more of the bladders 132, 134, 136, 138 in response to a landing event. The landing event may comprise landing of the aircraft 100, unlocking or unlatching of the cover 142 of the cargo pod 102, entry of predetermined code into a keypad or touchscreen associated with the cargo pod 102 or the control system 120, and/or opening the cover 142 of the cargo pod 102, to allow for selective removal of the payload by the intended recipient. Thereafter, the aircraft 100 may be preprogrammed to return to its origin or to an alternative destination.

While the embodiments shown depict aircraft 100 that is an APT convertible drone aircraft, it will be appreciated that the embodiments for enabling adaptive aircraft control may be used in any other aircraft and/or rotorcraft to facilitate more efficient transport of payload from a point of origin to a destination. The cargo pod 102 may be affixed to an exterior of the aircraft, or alternatively, be affixed to an interior of an aircraft component, such as a fuselage. This is applicable to both "manned" and "unmanned" aircraft. Further, in some embodiments, it will be appreciated that cargo pod 102 and the associated bladder system 130 may be retrofit with existing manned or unmanned aircraft and/or rotorcraft.

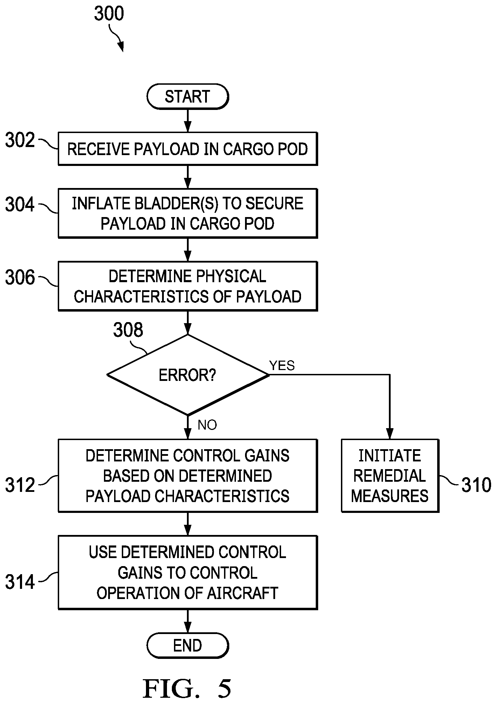

Referring to FIGURE 5, a flowchart of a method 300 of providing adaptive flight controls for an aircraft, such as aircraft 100, is shown. Method 300 begins at step 302, in which a payload is received within a cargo pod, such as cargo pod 102, of the aircraft. In step 304, the payload is secured within the cargo pod. For example, in one embodiment, at least one inflatable bladder, such as bladders 132, 134, 136, 138 is inflated to an initial pressure to secure the payload within the cargo pod. In step 306, responsive to a triggering event, such as closing of a cover, such as cover 142, of the cargo pod, the aircraft determines certain physical characteristics of the payload, including weight, and optionally CG, and/or inertia. Step 306 is accomplished by the aircraft performing one or more predetermined maneuvers designed to detect the physical components of the payload. Additionally, step 306 is accomplished by the aircraft receiving information regarding the physical characteristics from an external source and/or using one or more sensors for reading or detecting a shipping label, QR code, RFID tag, or other identifying feature associated with the payload that associates such physical characteristics with the payload.

In embodiments, multiple methods of determining the physical characteristics of the payload are performed, with results of each being compared to the other. The aircraft performs a series of maneuvers to determine physical characteristics of the payload and compares the physical characteristics so determined with physical characteristics provided by a remote source or determined using a sensor. In such instances, an error may result if the two sets of data are different. Accordingly, in step 308, a determination is made whether an error has occurred. If it is determined in step 308 that an error has occurred, execution proceeds to step 310, in which remedial measures are taken. Such remedial measures may include grounding of the aircraft until the discrepancy is resolved and/or notifying a user of the discrepancy.

Alternatively, if it is determined in step 308 that an error has not occurred, execution proceeds to step 312, in which the aircraft's control system such as control system 120, determines appropriate control gains for the combination of the aircraft and payload based on the physical characteristics of the payload determined in step 306. In one embodiment, step 308 is performed by using the physical characteristics as indices to one or more lookup tables preprogrammed with control gains (or ranges thereof) optimized for the combination of physical characteristics. In another embodiment, step 308 is performed by using the physical characteristics as input to a numerical model to determine optimal control gains for the configuration. In yet another embodiment, artificial intelligence ("AI") may be applied to the physical characterizes to determine the optimal control gains for the aircraft/payload combination. In step 314, the control gains determined in step 312 are used to control operation of the aircraft. Additionally, method 300 may also comprise the steps of self-directing the aircraft to a preprogrammed destination via a location-based guidance system and/or depressurizing at least one bladder in response to a landing event. It will be recognized that, once the payload is removed from the cargo pod, control gains may be returned to their initial levels.

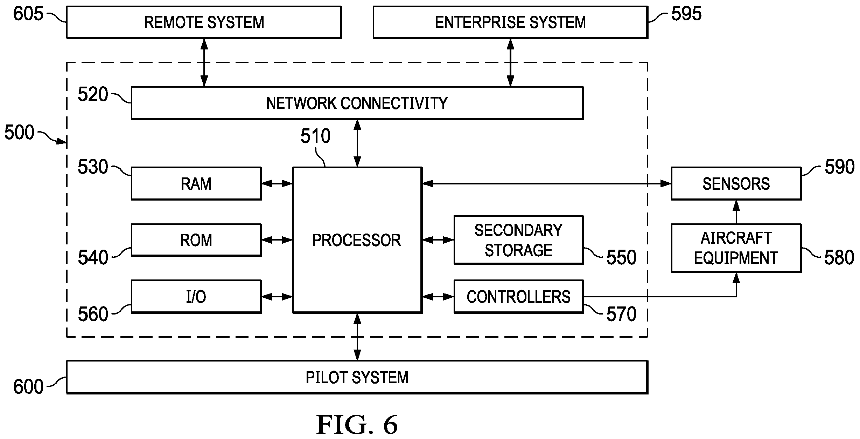

Referring to FIGURE 6, a schematic diagram of a general-purpose processor (e.g. electronic controller or computer) system 500 suitable for implementing the embodiments of this disclosure is shown. System 500 includes a processing component 510 suitable for implementing one or more embodiments disclosed herein. In particular, control system 120 of aircraft 100 configured to control operation of the propulsion assemblies 115, optional bladder system 130, and/or other electronic systems of aircraft 100 disclosed herein may comprise one or more systems 500. In addition to the processor 510 (which may be referred to as a central processor unit or CPU), the system 500 may include network connectivity devices 520, random access memory ("RAM") 530, read only memory ("ROM") 540, secondary storage 550, and input/output (I/O) devices 560. System 500 may also comprise aircraft component controllers 570 for generating control signals to aircraft equipment 580 (e.g., propulsion assemblies 115 and/or control assemblies including control surfaces) in accordance with the teachings of embodiments described herein. Sensors 590 (e.g., sensors 116, 118, 119) are also provided and provide sensor data to be processed by processor 510. In some cases, some of these components may not be present or may be combined in various combinations with one another or with other components not shown. These components might be located in a single physical entity or in more than one physical entity. Any actions described herein as being taken by the processor 510 might be taken by the processor 510 alone or by the processor 510 in conjunction with one or more components shown or not shown in the system 500. It will be appreciated that the data and lookup tables described herein may be stored in memory (e.g., RAM 530, ROM 540) and/or in one or more databases comprising secondary storage 550.

The processor 510 executes instructions, codes, computer programs, or scripts that it might access from the network connectivity devices 520, RAM 530, ROM 540, or secondary storage 550 (which might include various disk-based systems such as hard disk, floppy disk, optical disk, or other drive). While only one processor 510 is shown, multiple processors may be present. Thus, while instructions may be discussed as being executed by processor 510, the instructions may be executed simultaneously, serially, or otherwise by one or multiple processors 510. The processor 510 may be implemented as one or more CPU chips and/or application specific integrated chips (ASICs).

The network connectivity devices 520 may take the form of modems, modem banks, Ethernet devices, universal serial bus ("USB") interface devices, serial interfaces, token ring devices, fiber distributed data interface ("FDDI") devices, wireless local area network ("WLAN") devices, radio transceiver devices such as code division multiple access ("CDMA") devices, global system for mobile communications ("GSM") radio transceiver devices, worldwide interoperability for microwave access ("WiMAX") devices, and/or other well-known devices for connecting to networks. These network connectivity devices 520 may enable the processor 510 to communicate with the Internet or one or more telecommunications networks or other networks from which the processor 510 might receive information or to which the processor 510 might output information.

The network connectivity devices 520 might also include one or more transceiver components capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component might include separate receiving and transmitting units or a single transceiver. Information transmitted or received by the transceiver may include data that has been processed by the processor 510 or instructions that are to be executed by processor 510. Such information may be received from and outputted to a network in the form, for example, of a computer data baseband signal or signal embodied in a carrier wave. The data may be ordered according to different sequences as may be desirable for either processing or generating the data, transmitting or receiving the data, and/or controlling the aircraft 100 and/or bladder system 130. The baseband signal, the signal embedded in the carrier wave, or other types of signals currently used or hereafter developed may be referred to as the transmission medium and may be generated according to several methods well known to one skilled in the art. In one embodiment, network connectivity devices 520 may be used to communicate with an enterprise system 595.

In a particular embodiment, enterprise system 595 may include one or more databases for storing data communicated to the enterprise system, as well as modules for accessing and/or processing the data and I/O devices for interacting with and/or displaying the pre- or post-processed data. Such data may include an ID number, weight, CG, and inertia information associated with a payload. The data may also identify a type of the aircraft and control gain data determined for the combination of aircraft and payload. This information may be leveraged later for later aircraft/payload combination so that the information can be provided. Enterprise system 595 may also receive sensor data from sensors 590, which may be stored in one or more databases comprising enterprise system.

The RAM 530 might be used to store volatile data and perhaps to store instructions that are executed by the processor 510. The ROM 540 is a non-volatile memory device that typically has a smaller memory capacity than the memory capacity of the secondary storage 550. ROM 540 might be used to store instructions and perhaps data that are read during execution of the instructions. Access to both RAM 530 and ROM 540 is typically faster than to secondary storage 550. The secondary storage 550 is typically comprised of one or more disk drives, tape drives, or solid-state drives and might be used for non-volatile storage of data or as an over-flow data storage device if RAM 530 is not large enough to hold all working data. Secondary storage 550 may be used to store programs or instructions that are loaded into RAM 530 when such programs are selected for execution or information is needed.

The I/O devices 560 may include liquid crystal displays (LCDs), touchscreen displays, keyboards, keypads, switches, dials, mice, track balls, voice recognizers, card readers, paper tape readers, printers, video monitors, transducers, sensors 590 (e.g., sensors 116, 118, 119 of aircraft 100), motor drive electronics, or other well-known input or output devices, such a cyclic control, collective control, and pedal inputs used by a pilot, co-pilot, or remote pilot. Also, the transceiver 525 might be considered to be a component of the I/O devices 560 instead of or in addition to being a component of the network connectivity devices 520. Some or all of the I/O devices 560 may be substantially similar to various components disclosed herein and/or may be components of any of the control systems (e.g., control system 120 of aircraft 100) and/or other electronic systems disclosed herein. Further, inputs provided through an I/O device 560, such as control system 120, may communicate with aircraft component control 570, which may include control for the bladder system 130. Thus, control system 120 may provide control signals to the bladder system 130 to adjust, control, and/or maintain a center of gravity of a payload in the cargo pod 102 and/or the aircraft 100 as a whole during flight. Feedback via aircraft response 580 and/or sensors 590 (e.g., sensors 116, 118, 119, and/or other aircraft system sensors) may further communicate through one or more of the network connectivity devices 520 to provide feedback to control aircraft 100 and its associated systems.

It is to be understood by those skilled in the art that system 500 may be implemented in a variety of forms including hardware, software, firmware, special purpose processors and combinations thereof, and may comprise an autonomous flight system. System 500 may receive input from a variety of sources including on-board sources such as sensors 590 and a pilot system 600 as well as external sources such as a remote system 605, global positioning system satellites or other location positioning systems and the like. For example, system 500 may receive a flight plan including starting and ending locations for a mission from pilot system 600 and/or remote system 605. Thereafter system 500 is operable to autonomously control all aspects of flight of an aircraft of the present disclosure.

For example, during the various operating modes of aircraft 100 including vertical takeoff and landing mode, hover flight mode, forward flight mode, and transitions therebetween, commands are provided to controllers 570, which enable independent operation of each propulsion assembly 115 including, for example, controlling the rotational speed of the rotors, changing the pitch of the rotor blades, adjusting the thrust vectors and the like. In addition, these commands enable transition of aircraft 100 between the vertical lift orientation and the forward thrust orientation. Feedback may be received from controllers 570 and each propulsion assembly 115. This feedback is processed by processor 510 and can be used to supply correction data and other information to controllers 570. Sensors 590, such as positioning sensors, attitude sensors, speed sensors, environmental sensors, fuel sensors, temperature sensors, location sensors and the like, also provide information to further enhance autonomous control capabilities.

Some or all of the autonomous control capability of system 500 can be augmented or supplanted by a remote flight control system, such as remote system 605. Remote system 605 may include one or computing systems that may be implemented on general-purpose computers, special purpose computers or other machines with memory and processing capability. For example, the computing systems may include one or more memory storage modules including, but is not limited to, internal storage memory such as random-access memory, non-volatile memory such as read only memory, removable memory such as magnetic storage memory, optical storage memory, solid-state storage memory or other suitable memory storage entity. The computing systems may be microprocessor-based systems operable to execute program code in the form of machine-executable instructions. In addition, the computing systems may be connected to other computer systems via a proprietary encrypted network, a public encrypted network, the Internet or other suitable communication network that may include both wired and wireless connections. The communication network may be a local area network, a wide area network, the Internet, or any other type of network that couples a plurality of computers to enable various modes of communication via network messages using as suitable communication techniques, such as transmission control protocol/internet protocol, file transfer protocol, hypertext transfer protocol, internet protocol security protocol, point-to-point tunneling protocol, secure sockets layer protocol or other suitable protocol. Remote system 605 may communicate with flight control system 500 via network connectivity devices 605 using include both wired and wireless connections.

Remote system 605 preferably includes one or more flight data display devices configured to display information relating to one or more aircraft of the present disclosure. Display devices may be configured in any suitable form, including, for example, liquid crystal displays, light emitting diode displays, cathode ray tube displays or any suitable type of display. Remote system 605 may also include audio output and input devices such as a microphone, speakers and/or an audio port allowing an operator to communicate with, for example, a pilot on board aircraft 100. The display device may also serve as a remote input device if a touch screen display implementation is used, however, other remote input devices, such as a keyboard or joysticks, may alternatively be used to allow an operator to provide control commands to an aircraft being operated responsive to remote control.

Some or all of the autonomous and/or remote flight control of an aircraft of the present disclosure can be augmented or supplanted by onboard pilot flight control from pilot system 600. Pilot system 600 may be integrated with system 500 or may be a standalone system preferably including a non-transitory computer readable storage medium including a set of computer instructions executable by a processor and may be implemented by a general-purpose computer, a special purpose computer or other machine with memory and processing capability. Pilot system 600 may include one or more memory storage modules including, but is not limited to, internal storage memory such as random-access memory, non- volatile memory such as read only memory, removable memory such as magnetic storage memory, optical storage memory, solid-state storage memory or other suitable memory storage entity. Pilot system 600 may be a microprocessor-based system operable to execute program code in the form of machine-executable instructions. In addition, pilot system 600 may be connectable to other computer systems via a proprietary encrypted network, a public encrypted network, the Internet or other suitable communication network that may include both wired and wireless connections. Pilot system 600 may communicate with system 500 via a communication channel that preferably includes a wired connection.

Pilot system 600 preferably includes a cockpit display device configured to display information to an onboard pilot. Cockpit display device may be configured in any suitable form, including, for example, as one or more display screens such as liquid crystal displays, light emitting diode displays and the like or any other suitable display type including, for example, a display panel, a dashboard display, an augmented reality display or the like. Pilot system 600 may also include audio output and input devices such as a microphone, speakers and/or an audio port allowing an onboard pilot to communicate with, for example, air traffic control or an operator of a remote system. Cockpit display device may also serve as a pilot input device if a touch screen display implementation is used, however, other user interface devices may alternatively be used to allow an onboard pilot to provide control commands to an aircraft being operated responsive to onboard pilot control including, for example, a control panel, mechanical control devices or other control devices. As should be apparent to those having ordinarily skill in the art, through the use of system 500, an aircraft of the present disclosure can be operated responsive to a flight control protocol including autonomous flight control, remote flight control or onboard pilot flight control and combinations thereof.

Although several embodiments have been illustrated and described in detail, numerous other changes, substitutions, variations, alterations, and/or modifications are possible without departing from the scope of the present invention, as defined by the appended claims.

## Claims

1. An aircraft (100), comprising:
at least one propulsion assembly (115);
a cargo area (102) for receiving a payload to be transported by the aircraft (100);
a plurality of sensors (118, 119) disposed on the aircraft (100); and
a control system (120) configured to:
determine characteristics of the received payload;
automatically determine optimal control gains for operating the aircraft (100) including the payload based on the determined payload characteristics; and
provide control signals to at least one of the at least one propulsion assembly (115) to control operation of the at least one propulsion assembly (115) in accordance with the determined optimal control gains;
wherein
the payload characteristics include weight; wherein
the control system (120) determines the characteristics of the received payload by causing the aircraft to perform a series of maneuvers and by detecting a response of the aircraft (100) using the plurality of sensors (118, 119) disposed on the aircraft (100); wherein
the control system (120) is further configured to determine a weight of the payload through at least one of:
receiving a weight of the payload from a remote source; and
receiving the weight of the payload via a payload sensor configured to read an identification tag associated with the payload, wherein the identification tag associates payload characteristics with the payload; wherein
the control system (120) is further configured to:
compare the weight of the payload determined by the aircraft performing a series of maneuvers with the weight of the payload provided by the remote source or determined using the payload sensor (116);
determine whether the weight of the payload corresponds to an operational error, wherein the weight of the payload corresponds to an operational error if the weight of the payload determined by the aircraft performing a series of maneuvers and the weight of the payload provided by the remote source or determined using the payload sensor (116) are different; and
if the weight of the payload corresponds to an operational error, initiate remedial measures, wherein the remedial measures include at least one of aborting takeoff, alerting an administrator regarding the error, and returning the payload to its origin.

2. A method (300) of operating an aircraft (100) and carried out by said aircraft (100), the method (300) comprising:
determining (306) characteristics of a payload received in a cargo area (102) of the aircraft (100), the payload to be transported by the aircraft (100);
automatically (312) determining optimal control gains for operating the aircraft (100) including the payload based on the determined payload characteristics; and
providing control signals to at least one of the at least one propulsion assembly (115) to control (314) operation of the at least one propulsion assembly (115) in accordance with the determined optimal control gains;
wherein
determining the characteristics of the received payload comprises:
performing a series of maneuvers; and
detecting a response of the aircraft (100) using a plurality of sensors (116, 118, 119) disposed on the aircraft (100);
the method (300) further comprising:
determining a weight of the payload through at least one of:
receiving a weight of the payload from a remote source; and
reading an identification tag associated with the payload using a payload sensor (116) configured to read the identification tag, wherein the identification tag associates payload characteristics with the payload, and wherein the payload characteristics include weight;
comparing the weight of the payload determined by the aircraft performing a series of maneuvers with the weight of the payload provided by the remote source or determined using the payload sensor (116);
determining whether the weight of the payload corresponds to an operational error, wherein the weight of the payload corresponds to an operational error if the weight of the payload determined by the aircraft performing a series of maneuvers and the weight of the payload provided by the remote source or determined using the payload sensor (116) are different; and
if the weight of the payload corresponds to an operational error, initiating remedial measures, wherein the remedial measures include at least one of aborting takeoff, alerting an administrator regarding the error, and returning the payload to its origin.

3. The aircraft (100) of claim 1 further comprising first and second wings (104) and first and second vertical supports (105) disposed between the first and second wings (104), wherein the cargo area (102) comprises a cargo pod (102) disposed between the first and second vertical supports (105) and wherein the at least one propulsion assembly (115) comprises a propulsion assembly (115) connected to each end of each of the first and second wings (104).

4. The aircraft (100) of any preceding aircraft claim, or the method (300) of any preceding method claim, wherein the aircraft (100) comprises a vertical take-off and landing vehicle.

5. The aircraft (100) of any preceding aircraft claim, wherein the control system (120) comprises at least one of an autonomous system, a remote system, and an on-board pilot system.

6. The aircraft (100) of any preceding aircraft claim, further comprising the payload sensor (116), wherein the control system (120) is configured to determine identifying information for the payload and query a database for payload physical characteristics associated with the identifying information to determine physical characteristics of the payload, wherein the payload sensor (116) is configured to read an identification tag associated with the payload to determine identifying information for the payload; or
the method (300) of any preceding method claim further comprising determining physical characteristics of the payload, wherein determining physical characteristics of the payload comprises:
determining identifying information for the payload, wherein the determining identifying information for the payload comprises reading an identification tag associated with the payload; and
querying a database for payload physical characteristics associated with the identifying information.

7. The aircraft (100) of any preceding aircraft claim, wherein the control system (120) determines the optimal control gains by using the determined payload characteristics to index a lookup table associated with the control system (120); or
the method (300) of any preceding method claim, wherein the determining the optimal control gains further comprises using the determined payload characteristics to index a lookup table associated with the aircraft (100).

8. The aircraft (100) of any preceding aircraft claim, further comprising the payload sensor (116), wherein the control system (120) is further configured to:
determine identifying information for the payload, wherein the payload sensor (116) is configured to read an identification tag associated with the payload to determine the identifying information for the payload; and
store the identifying information and determined payload characteristics in a database; or
the method (300) of any preceding claim further comprising:
determining identifying information for the payload, wherein the determining identifying information for the payload comprises reading an identification tag associated with the payload; and
storing the identifying information and payload characteristics in a database.

## Patentansprüche

1. Fluggerät (100), umfassend:
mindestens eine Vortriebsbaugruppe (115),
einen Frachtbereich (102) zum Empfangen einer Nutzlast, die mit dem Fluggerät (100) zu transportieren ist,
mehrere Sensoren (118, 119), die an dem Fluggerät (100) angeordnet sind, und
ein Steuersystem (120), das zu Folgendem konfiguriert ist:
Bestimmen von Charakteristika der empfangenen Nutzlast,
automatisches Bestimmen optimaler Steuerverstärkungen zum Betreiben des Fluggeräts (100), das die Nutzlast einschließt, basierend auf den bestimmten Nutzlastcharakteristika, und
Bereitstellen von Steuersignalen für mindestens eine der mindestens einen Vortriebsbaugruppe (115), um den Betrieb der mindestens einen Vortriebsbaugruppe (115) gemäß den bestimmten optimalen Steuerverstärkungen zu steuern,
wobei
die Nutzlastcharakteristika das Gewicht einschließen, wobei
das Steuersystem (120) die Charakteristika der empfangenen Nutzlast bestimmt, indem es das Fluggerät veranlasst, eine Reihe von Manövern durchzuführen, und indem es mit Hilfe der mehreren Sensoren (118, 119), die an dem Fluggerät (100) angeordnet sind, eine Reaktion des Fluggeräts (100) erkennt, wobei
das Steuersystem (120) ferner dazu konfiguriert ist, ein Gewicht der Nutzlast durch mindestens eines des Folgenden zu bestimmen:
Empfangen eines Gewichts der Nutzlast von einer fernen Quelle und
Empfangen des Gewichts der Nutzlast über einen Nutzlastsensor, der dazu konfiguriert ist, ein der Nutzlast zugeordnetes Identifikationsetikett zu lesen, wobei das Identifikationsetikett Nutzlastcharakteristika der Nutzlast zuordnet, wobei
das Steuersystem (102) ferner zu Folgendem konfiguriert ist:
Vergleichen des Gewichts der Nutzlast, das bestimmt wurde, indem das Fluggerät eine Reihe von Manövern durchführt, mit dem Gewicht der Nutzlast, das von der fernen Quelle bereitgestellt wurde oder das mit Hilfe des Nutzlastsensors (116) bestimmt wurde,
Bestimmen, ob das Gewicht der Nutzlast einem betriebsbedingten Fehler entspricht, wobei das Gewicht der Nutzlast einem betriebsbedingten Fehler entspricht, wenn das Gewicht der Nutzlast, das bestimmt wurde, indem das Fluggerät eine Reihe von Manövern durchführt, und das Gewicht der Nutzlast, das von der fernen Quelle bereitgestellt wurde oder das mit Hilfe des Nutzlastsensors (116) bestimmt wurde, sich unterscheiden, und
wenn das Gewicht der Nutzlast einem betriebsbedingten Fehler entspricht, Initiieren von Abhilfemaßnahmen, wobei die Abhilfemaßnahmen mindestens eines von Abbrechen des Starts, Warnen eines Administrators bezüglich des Fehlers und Zurückbringen der Nutzlast zu ihrem Ursprung einschließt.

2. Verfahren (300) zum Betreiben eines Fluggeräts (100) und ausgeführt von dem Fluggerät (100), wobei das Verfahren (300) Folgendes umfasst:
Bestimmen (306) von Charakteristika einer Nutzlast, die in einem Frachtbereich (102) des Fluggeräts (100) empfangen ist, wobei die Nutzlast von dem Fluggerät (100) zu transportieren ist,
automatisches (312) Bestimmen optimaler Steuerverstärkungen zum Betreiben des Fluggeräts (100), das die Nutzlast einschließt, basierend auf den bestimmten Nutzlastcharakteristika, und
Bereitstellen von Steuersignalen für mindestens eine Vortriebsbaugruppe (115), um den Betrieb der mindestens einen Vortriebsbaugruppe (115) gemäß den bestimmten optimalen Steuerverstärkungen zu steuern (314),
wobei
das Bestimmen der Charakteristika der empfangenen Nutzlast Folgendes umfasst:
Durchführen einer Reihe von Manövern, und
Erkennen einer Reaktion des Fluggeräts (100) mit Hilfe mehrerer Sensoren (116, 118, 119), die an dem Fluggerät (100) angeordnet sind,
wobei das Verfahren (300) ferner Folgendes umfasst:
Bestimmen eines Gewichts der Nutzlast durch mindestens eines des Folgenden:
Empfangen eines Gewichts der Nutzlast von einer fernen Quelle und
Lesen eines Identifikationsetiketts, das der Nutzlast zugeordnet ist, mit Hilfe eines Nutzlastsensors (116), der dazu konfiguriert ist, das Identifikationsetikett zu lesen, wobei das Identifikationsetikett Nutzlastcharakteristika der Nutzlast zuordnet, und wobei die Nutzlastcharakteristika das Gewicht einschließen,
Vergleichen des Gewichts der Nutzlast, das bestimmt wurde, indem das Fluggerät eine Reihe von Manövern durchführt, mit dem Gewicht der Nutzlast, das von der fernen Quelle bereitgestellt wurde oder das mit Hilfe des Nutzlastsensors (116) bestimmt wurde,
Bestimmen, ob das Gewicht der Nutzlast einem betriebsbedingten Fehler entspricht, wobei das Gewicht der Nutzlast einem betriebsbedingten Fehler entspricht, wenn das Gewicht der Nutzlast, das bestimmt wurde, indem das Fluggerät eine Reihe von Manövern durchführt, und das Gewicht der Nutzlast, das von der fernen Quelle bereitgestellt wurde oder das mit Hilfe des Nutzlastsensors (116) bestimmt wurde, sich unterscheiden, und
wenn das Gewicht der Nutzlast einem betriebsbedingten Fehler entspricht, Initiieren von Abhilfemaßnahmen, wobei die Abhilfemaßnahmen mindestens eines von Abbrechen des Starts, Warnen eines Administrators bezüglich des Fehlers und Zurückbringen der Nutzlast zu ihrem Ursprung einschließt.

3. Fluggerät (100) nach Anspruch 1, ferner erste und zweite Flügel (104) sowie erste und zweite vertikale Stützen (105), die zwischen den ersten und zweiten Flügeln (104) angeordnet sind, umfassend, wobei der Frachtbereich (102) eine Frachtkapsel (102) umfasst, die zwischen den ersten und den zweiten vertikalen Stützen (105) angeordnet ist, und wobei die mindestens eine Vortriebsbaugruppe (115) eine Vortriebsbaugruppe (115) umfasst, die mit jedem Ende jedes der ersten und der zweiten Flügel (104) verbunden sind.

4. Fluggerät (100) nach einem vorhergehenden Fluggerätanspruch oder Verfahren (300) nach einem vorhergehenden Verfahrensanspruch, wobei das Fluggerät (100) ein Fluggerät für Senkrechtstart und -landung umfasst.

5. Fluggerät (100) nach einem vorhergehenden Fluggerätanspruch, wobei das Steuersystem (120) mindestens eines von einem autonomen System, einem Fernsystem und einem Bordpilotsystem umfasst.

6. Fluggerät (100) nach einem vorhergehenden Fluggerätanspruch, ferner den Nutzlastsensor (116) umfassend, wobei das Steuersystem (120) dazu konfiguriert ist, identifizierende Informationen für die Nutzlast zu bestimmen und eine Datenbank nach physikalischen Nutzlastcharakteristika abzufragen, die den identifizierenden Informationen zugeordnet sind, um physikalische Charakteristika der Nutzlast zu bestimmen, wobei der Nutzlastsensor (116) dazu konfiguriert ist, ein der Nutzlast zugeordnetes Identifikationsetikett zu lesen, um identifizierende Informationen für die Nutzlast zu bestimmen, oder
Verfahren (300) nach einem vorhergehenden Verfahrensanspruch, ferner das Bestimmen physikalischer Charakteristika der Nutzlast umfassend, wobei das Bestimmen physikalischer Charakteristika der Nutzlast Folgendes umfasst:
Bestimmen identifizierender Informationen für die Nutzlast, wobei das Bestimmen identifizierender Informationen für die Nutzlast das Lesen eines der Nutzlast zugeordneten Identifikationsetiketts umfasst, und
Abfragen einer Datenbank nach physikalischen Nutzlastcharakteristika, die den identifizierenden Informationen zugeordnet sind.

7. Fluggerät (100) nach einem vorhergehenden Fluggerätanspruch, wobei das Steuersystem (120) die optimalen Steuerverstärkungen bestimmt, indem es die bestimmten Nutzlastcharakteristika verwendet, um eine dem Steuersystem (120) zugeordnete Nachschlagetabelle zu indizieren, oder
Verfahren (300) nach einem vorhergehenden Verfahrensanspruch, wobei das Bestimmen der optimalen Steuerverstärkungen ferner das Verwenden von Nutzlastcharakteristika umfasst, um eine dem Fluggerät (100) zugeordnete Nachschlagetabelle zu indizieren.

8. Fluggerät (100) nach einem vorhergehenden Fluggerätanspruch, ferner den Nutzlastsensor (116) umfassend, wobei das Steuersystem (120) ferner zu Folgendem konfiguriert ist:
Bestimmen identifizierender Informationen für die Nutzlast, wobei der Nutzlastsensor (116) dazu konfiguriert ist, ein der Nutzlast zugeordnetes Identifikationsetikett zu lesen, um die identifizierenden Informationen für die Nutzlast zu bestimmen, und
Speichern der identifizierenden Informationen und bestimmten Nutzlastcharakteristika in einer Datenbank, oder
Verfahren (300) nach einem vorhergehenden Anspruch, ferner Folgendes umfassend:
Bestimmen identifizierender Informationen für die Nutzlast, wobei das Bestimmen identifizierender Informationen für die Nutzlast das Lesen eines der Nutzlast zugeordneten Identifikationsetiketts umfasst, und
Speichern der identifizierenden Informationen und der Nutzlastcharakteristika in einer Datenbank.

## Revendications

1. Aéronef (100), comprenant :
au moins un ensemble de propulsion (115) ;
un espace de fret (102) destiné à recevoir une charge utile devant être transportée par l'aéronef (100) ;
une pluralité de capteurs (118, 119) placés sur l'aéronef (100) ; et
un système de commande (120) configuré pour :
déterminer des caractéristiques de la charge utile reçue ;
déterminer automatiquement des gains de commande optimaux pour faire fonctionner l'aéronef (100) comportant la charge utile sur la base des caractéristiques déterminées de la charge utile ; et
fournir des signaux de commande à au moins un de l'au moins un ensemble de propulsion (115) pour commander le fonctionnement de l'au moins un ensemble de propulsion (115) conformément aux gains de commande optimaux déterminés ;
les caractéristiques de la charge utile comportant son poids ;
le système de commande (120) déterminant les caractéristiques de la charge utile reçue en amenant l'aéronef à exécuter une série de manoeuvres et en détectant une réaction de l'aéronef (100) au moyen de la pluralité de capteurs (118, 119) placés sur l'aéronef (100) ;
le système de commande (120) étant configuré en outre pour déterminer un poids de la charge utile par :
réception d'un poids de la charge utile depuis une source distante ; et/ou
réception du poids de la charge utile via un capteur de charge utile configuré pour lire une étiquette d'identification associée à la charge utile, l'étiquette d'identification associant des caractéristiques de la charge utile à la charge utile ;
le système de commande (120) étant configuré en outre pour :
comparer le poids de la charge utile déterminé par l'exécution, par l'aéronef, d'une série de manoeuvres au poids de la charge utile fourni par la source distante ou déterminé au moyen du capteur de charge utile (116) ;
déterminer si le poids de la charge utile correspond ou non à une erreur opérationnelle, le poids de la charge utile correspondant à une erreur opérationnelle si le poids de la charge utile déterminé par l'exécution, par l'aéronef, d'une série de manoeuvres et le poids de la charge utile fourni par la source distante ou déterminé au moyen du capteur de charge utile (116) sont différents ; et
si le poids de la charge utile correspond à une erreur opérationnelle, déclencher des mesures correctives, les mesures correctives comportant l'abandon du décollage et/ou la notification de l'erreur à un administrateur et/ou le retour de la charge utile à son point d'origine.

2. Procédé (300) pour faire fonctionner un aéronef (100) et mis en œuvre par ledit aéronef (100), le procédé (300) comprenant :
la détermination (306) de caractéristiques d'une charge utile reçue dans un espace de fret (102) de l'aéronef (100), la charge utile devant être transportée par l'aéronef (100) ;
la détermination automatique (312) de gains de commande optimaux pour faire fonctionner l'aéronef (100) comportant la charge utile sur la base des caractéristiques déterminées de la charge utile ; et
la fourniture de signaux de commande à au moins un de l'au moins un ensemble de propulsion (115) pour commander (314) le fonctionnement de l'au moins un ensemble de propulsion (115) conformément aux gains de commande optimaux déterminés ;
la détermination des caractéristiques de la charge utile reçue comprenant :
l'exécution d'une série de manoeuvres ; et
la détection d'une réaction de l'aéronef (100) au moyen d'une pluralité de capteurs (116, 118, 119) placés sur l'aéronef (100) ;
le procédé (300) comprenant en outre :
la détermination d'un poids de la charge utile par :
réception d'un poids de la charge utile depuis une source distante ; et/ou
lecture d'une étiquette d'identification associée à la charge utile au moyen d'un capteur de charge utile (116) configuré pour lire l'étiquette d'identification, l'étiquette d'identification associant des caractéristiques de la charge utile à la charge utile, et les caractéristiques de la charge utile comportant son poids ;
la comparaison du poids de la charge utile déterminé par l'exécution, par l'aéronef, d'une série de manoeuvres au poids de la charge utile fourni par la source distante ou déterminé au moyen du capteur de charge utile (116) ;
la détermination si le poids de la charge utile correspond ou non à une erreur opérationnelle, le poids de la charge utile correspondant à une erreur opérationnelle si le poids de la charge utile déterminé par l'exécution, par l'aéronef, d'une série de manoeuvres et le poids de la charge utile fourni par la source distante ou déterminé au moyen du capteur de charge utile (116) sont différents ; et
si le poids de la charge utile correspond à une erreur opérationnelle, le déclenchement de mesures correctives, les mesures correctives comportant l'abandon du décollage et/ou la notification de l'erreur à un administrateur et/ou le retour de la charge utile à son point d'origine.

3. Aéronef (100) selon la revendication 1, comprenant en outre des première et deuxième ailes (104) et des premier et deuxième supports verticaux (105) placés entre les première et deuxième ailes (104), l'espace de fret (102) comprenant une capsule de fret (102) placée entre les premier et deuxième supports verticaux (105), et l'au moins un ensemble de propulsion (115) comprenant un ensemble de propulsion (115) fixé à chaque extrémité de chacune des première et deuxième ailes (104).

4. Aéronef (100) selon l'une quelconque des revendications d'aéronef précédentes, ou procédé (300) selon l'une quelconque des revendications de procédé précédentes, l'aéronef (100) comprenant un véhicule à décollage et atterrissage verticaux.

5. Aéronef (100) selon l'une quelconque des revendications d'aéronef précédentes, dans lequel le système de commande (120) comprend un système autonome et/ou un système distant et/ou un système de pilotage embarqué.

6. Aéronef (100) selon l'une quelconque des revendications d'aéronef précédentes, comprenant en outre le capteur de charge utile (116), le système de commande (120) étant configuré pour déterminer des informations d'identification pour la charge utile et interroger une base de données à la recherche de caractéristiques physiques de la charge utile associées aux informations d'identification afin de déterminer des caractéristiques physiques de la charge utile, le capteur de charge utile (116) étant configuré pour lire une étiquette d'identification associée à la charge utile afin de déterminer des informations d'identification pour la charge utile ; ou
procédé (300) selon l'une quelconque des revendications de procédé précédentes comprenant en outre la détermination de caractéristiques physiques de la charge utile, la détermination de caractéristiques physiques de la charge utile comprenant :
la détermination d'informations d'identification pour la charge utile, la détermination d'informations d'identification pour la charge utile comprenant la lecture d'une étiquette d'identification associée à la charge utile ; et
l'interrogation d'une base de données à la recherche de caractéristiques physiques de la charge utile associées aux informations d'identification.

7. Aéronef (100) selon l'une quelconque des revendications d'aéronef précédentes, dans lequel le système de commande (120) détermine les gains de commande optimaux en utilisant les caractéristiques déterminées de la charge utile pour indexer une table de correspondance associée au système de commande (120) ; ou
procédé (300) selon l'une quelconque des revendications de procédé précédentes, dans lequel la détermination des gains de commande optimaux comprend en outre l'utilisation des caractéristiques déterminées de la charge utile pour indexer une table de correspondance associée à l'aéronef (100).

8. Aéronef (100) selon l'une quelconque des revendications d'aéronef précédentes, comprenant en outre le capteur de charge utile (116), le système de commande (120) étant configuré en outre pour :
déterminer des informations d'identification pour la charge utile, le capteur de charge utile (116) étant configuré pour lire une étiquette d'identification associée à la charge utile afin de déterminer les informations d'identification pour la charge utile ; et
stocker les informations d'identification et les caractéristiques déterminées de la charge utile dans une base de données ; ou
procédé (300) selon l'une quelconque des revendications de procédé précédentes comprenant en outre :
la détermination d'informations d'identification pour la charge utile, la détermination d'informations d'identification pour la charge utile comprenant la lecture d'une étiquette d'identification associée à la charge utile ; et
le stockage des informations d'identification et des caractéristiques de la charge utile dans une base de données.
